# EUROPÄISCHE PATENTSCHRIFT

(11) **EP 1 466 157 B1**
(45) Veröffentlichungstag und Bekanntmachung des Hinweises auf die Patenterteilung: **03.08.2005**
(21) Anmeldenummer: 03704426.0
(22) Anmeldetag: 17.01.2003
(51) Int. Cl.: G01N 3/04, G01N 3/30

(54) **VORRICHTUNG ZUR SCHWINGUNGSARMEN KRAFTMESSUNG BEI SCHNELLEN, DYNAMISCHEN ZUGVERSUCHEN AN WERKSTOFFPROBEN**
DEVICE FOR LOW-VIBRATION FORCE MEASUREMENT IN RAPID DYNAMIC TENSILE EXPERIMENTS ON MATERIAL SAMPLES
DISPOSITIF DE MESURE DE FORCE A FAIBLE TAUX DE VIBRATIONS DANS DES ESSAIS DE TRACTION DYNAMIQUES RAPIDES SUR DES ECHANTILLONS DE MATERIAUX

(30) Priorität: 18.01.2002 DE 10201861
(43) Veröffentlichungstag der Anmeldung: 13.10.2004
(73) Patentinhaber: FRAUNHOFER-GESELLSCHAFT ZUR FÖRDERUNG DER ANGEWANDTEN FORSCHUNG E.V., 80636 München (DE)
(72) Erfinder: BÖHME, Wolfgang, 79211 Denzlingen (DE); HUG, Manfred, 79291 Merdingen (DE)
(74) Vertreter: Rösler, Uwe, Dipl.-Phys.
(86) Internationale Anmeldenummer: PCT/EP2003/000458
(87) Internationale Veröffentlichungsnummer: WO 2003/060481

(56) Entgegenhaltungen:
- DE-A- 3 636 252
- DE-A- 4 204 589
- GB-A- 549 140
- US-A- 5 388 464
- US-A- 5 585 570

## Beschreibung

### Technisches Gebiet

Die Erfindung bezieht sich auf eine Vorrichtung zur schwingungsarmen Kraftmessung bei schnellen, crashrelevanten dynamischen Zugversuchen an Werkstoffproben, mit einer in die Einspannvorrichtung integrierten Kraftmesszelle mit wenigstens einem Kraftmesssensor.

### Stand der Technik

Crashsimulationen werden in zunehmendem Maße zur Vorausberechnung des Verformungs- und Versagensverhaltens von sicherheitsrelevanten Konstruktionen und Bauteilen unter Crashbelastung eingesetzt. Damit wird z. B. im Automobilbereich die Crashsicherheit von Fahrzeugen bereits vor der Herstellung von Prototypen virtuell ermittelt, bewertet und ggf. durch geeignete Maßnahmen verbessert.

Da die Zuverlässigkeit dieser Crashsimulationen stark von der Genauigkeit der verwendeten Eingabedaten abhängt, werden immer genauere und zuverlässigere Werkstoffdaten benötigt. Von besonderem Interesse sind in diesem Zusammenhang genaue Kenntnisse über das Verformungs- und Versagensverhalten von Werkstoffen sowohl bei langsamen, statischen als auch besonders bei schnellen, dynamischen Belastungen.

Das Verformungsverhalten technischer Werkstoffe wird mit Hilfe sog. Spannungs-Dehnungskurven charakterisiert. Sie sind die Grundlage für Berechnungen des Verformungsverhaltens eines aus dem jeweiligen Werkstoff gefertigten Bauteils bei einwirkenden äusseren Beanspruchungen. Das Verformungsverhalten unterschiedlicher Werkstoffe und die charakteristischen Spannungs-Dehnungskurven sind unterschiedlich stark von der Dehnrate, also der "Schnelligkeit" der einwirkenden Beanspruchung abhängig. Eine einmalige Belastung, die im Gegensatz zu statischer Belastung sehr viel schneller erfolgt, wird als dynamische Belastung bezeichnet.

Als Maßzahl für die "Schnelligkeit" der dynamischen Belastung wird die sogenannte Dehnrate mit der Einheit [1/s] verwendet, also die relative Längenänderung pro Zeiteinheit. Bei konventionellen, genormten langsamen, statischen Prüfungen werden z.B. Dehnraten von etwa 0,0001/s eingestellt. Dagegen treten in Crashsituationen und entsprechend bei crashrelevanten Versuchen Millionenfach schnellere Vorgänge mit Dehnraten bis zu 1000/s auf. Eine Dehnrate von 1000/s bedeutet anschaulich, dass eine angenommene Prüflänge von 1 m innerhalb nur 1 s auf die tausendfache Länge, also auf 1000m = 1 km Länge gedehnt würde. Bei den meisten technischen Werkstoffen tritt natürlich schon viel früher Versagen durch Bruch ein. Durch dynamische Belastungen, wie sie in Crashsituationen auftreten, können Bauteile oder Werkstoffproben in sehr kurzen Zeiten (im Bereich von Bruchteilen von Millisekunden) bis hin zum vollständigen Versagen (Bruch) verformt werden.

Die Ermittlung von werkstoffspezifischen dynamischen Spannungs-Dehnungskurven erfolgt üblicherweise durch Schnellzerreißversuche. Zur Durchführung derartiger Versuche werden an sich bekannte Schnellzerreißmaschinen sowie Schlagwerke eingesetzt, um entsprechend geformte Werkstoffproben, die zumeist als Rund- oder Flachzugproben ausgebildet sind, neben langsamen statischen insbesondere auch schnellen dynamischen Beanspruchungen gezielt auszusetzen.

Die während der Belastungsphase auf die Werkstoffproben einwirkenden Kräfte werden mittels Kraftmesszellen gemessen. Bei hohen Belastungsgeschwindigkeiten werden dazu beispielsweise Piezo-Kraftmesszellen eingesetzt. Die Befestigung der zu überprüfenden Werkstoffprobe mit der Kraftmesszelle erfolgt dabei mit Hilfe einer zwischen der eigentlichen Kraftmesszelle und der Werkstoffprobe zwischengeschalteten Einspannvorrichtung. Bei langsamer, quasi-statischer Belastung der Werkstoffprobe lassen sich die innerhalb der Werkstoffprobe wirkenden Kräfte mit Hilfe dieser Kraftmesszelle bzw. Kraftmesszellenanordnung zuverlässig messen.

Bei zunehmenden Belastungsraten, erfahrungsgemäß bei Dehnraten von mehr als 1/s ist allerdings zu beachten, dass diese schnellen Belastungsvorgänge, insbesondere auch bei Verwendung von Schnellzerreißmaschinen, in der Regel durch Stoßbelastung eingeleitet werden. Dabei werden durch Trägheitskräfte sowohl in der Kraftmesszelle, in der zwischengeschalteten Einspannvorrichtung und in der Werkstoffprobe komplexe elastische Wellen- und Einschwingvorgänge angeregt, die letztlich zu schwer interpretierbaren Kraftsignalen mit überlagerten Oszillationen führen. Je nach Versuchsanordnung bilden sich unterschiedlich stark ausgeprägte, überlagerte Schwingungen aus, die zu erheblichen Fehlinterpretationen des Werkstoffverhaltens führen können. Dadurch kann auch gerade der für Steifigkeitsberechnungen wichtige elastische Anfangsbereich der Spannungs-Dehnungs-Kurve sowie der sich an den Anfangsbereich anschliessende Kurvenbereich, der für den Verlauf der Verformung massgebend ist und den Übergang des zu untersuchenden Werkstoffs in den plastischen Bereich beschreibt und durch die technische Dehngrenze R_{p0,2} charakterisiert ist, mit zunehmender Dehnrate immer weniger genau bestimmt werden.

Ziel einer guten Hochgeschwindigkeits-Prüftechnik sollte es deshalb sein, diese überlagerten Schwingungen zu minimieren, um das Werkstoffverhalten bei schneller, einmaliger (zügiger) Belastung genau zu erfassen. Ebenso gilt es, das Werkstoffverhalten trotz der schnellen Belastung und den daraus resultierenden sehr kurzen Zeiten bis zum Bruch (im folgenden Beispiel nur wenig mehr als 100µs = 0,0001 s bis zum Bruch) genau zu messen.

Zur Vermeidung der vorstehend geschilderten Problematik, die insbesondere bei Werkstoffprobenuntersuchungen mit Dehnraten von mehr als 1/s auftritt, ist vorgeschlagen worden, die Kraftmessung bei Zugversuchen unmittelbar auf der zu untersuchenden Werkstoffprobe selbst mit Dehnungsmessstreifen vorzunehmen, die im dickeren, nur elastisch verformten Teil der Proben zu applizieren sind. Einzelheiten zu diesem Vorschlag sind z.B. aus der nachfolgenden Fundstelle zu entnehmen: W. Böhme, D.-Z. Sun, W. Schmitt, A, Hönig: Application of Micromechanical Material Models to the Evaluation of Charpy Tests, ASME-Symposium: Advances in Local Fracture/Damage Models For The Analysis of Engineering Fracture Problems, Scottsdale, Arizona, April 28 - May 1, 1992, Eds.: J. H. Giovanola and A. J. Rosakis, AMD-Vol. 137, Book No. H00741, pp. 203-216, 1992.

Die aus der vorstehenden Druckschrift zu entnehmende Technik bezüglich der unmittelbaren Applizierung von Dehnungsmessstreifen auf der zu untersuchenden Werkstoffprobe ist auch in europaweiten Fachkreisen akzeptiert worden, woraus sich ein europäischer Standard entwickelt hat, siehe hierzu ESIS-document P7-00, Procedure for Dynamic Tensile Tests (2000).

Zwar ist es möglich mit der europaweit standardisierten Technik insbesondere bei Stählen unter hohen Belastungsraten präzise Kraftmessungen durchzuführen, doch ist das Aufbringen von Dehnungsmessstreifen auf die zum Teil sehr klein dimensionierten Werkstoffproben sehr aufwendig und mit einem überaus filigranen Montageaufwand verbunden. Dies gilt besonders für aus Bauteilen entnommene und sehr klein dimensionierte Werkstoffproben, die häufig in Form von fast drahtähnlichen Gebilden mit Prüfdurchmessern von weniger als 2mm vorliegen und an deren kleindimensionierten Oberflächen entsprechende Dehnungsmessstreifen anzubringen sind. Hinzu kommt, dass eine derartige Messtechnik, zumindest bei hohen Genauigkeitsanforderungen durch statische Vorversuche zu kalibrieren ist, womit ein zusätzlicher prüf- und messtechnischer Aufwand verbunden ist.

Schließlich stößt auch diese Messtechnik an ihre Grenzen, in Fällen, in denen sich nicht nur im Prüfteil sondern auch im dickeren Bereich der Probe mit den applizierten Messstreifen plastische Verformungen einstellen, da dann in diesem Fall der lineare Zusammenhang zwischen der gemessenen Dehnung und der anliegenden Kraft verloren geht. Dies ist bspw. bei Werkstoffen mit nur kleinem linear-elastischem Bereich wie etwa bei Kunststoffen und Magnesiumlegierungen der Fall.

Aus der DE 36 36 252 C2 ist ein teilbarer Spannkopf mit integriertem DMS-Kraftaufnehmer zum Spannen von Zugproben entnehmbar, der zum Spannen von Zugproben in Zugprüfmaschinen, Pendelschlagwerken oder sonstigen Prüfmaschinen geeignet ist. Der Spannkopf sieht im Wesentlichen zwei Andruckplatten vor, zwischen denen eine Zugprobe in Form einer Flachzugprobe kraftschlüssig einspannbar ist, indem mit Hilfe eines Schraubmechanismusses die Andruckplatten gegeneinander gepreßt werden. Die beiden Andruckplatten sind mittels eines durch die Andruckplatten hindurchragenden Bolzens, mit einer Trägereinheit verbunden. Im Bereich dieses Verbindungsbolzens sind auf den Andruckplatten zur Kraftmessung Instrumentierungen mit Dehnungsmessstreifen vorgesehen. Durch Belasten der zwischen den Andruckplatten eingeklemmten Zugprobe entstehen zur Zugkraft proportionale Zugspannungen, die auf den Bolzen übertragen und mit Hilfe der Dehnmessstreifen erfasst werden. Es zeigt sich jedoch insbesondere bei schnellen Zugversuchen, die sich durch schlagartiges Reissen an der Zugprobe auszeichnen, dass gerade im Bereich von Verbindungsstellen, wie etwa einer Bolzenverbindung, aufgrund bestehender Verbindungsspalte zusätzliche lokale Schlagbelastungen und damit Trägheitskräfte auftreten, durch die die Messergebnisse verfälschende lokale Spannungsüberhöhungen und Schwingungen hervorgerufen werden. Eine lokale Kraftmessung unmittelbar an solchen Verbindungsstellen hat den Nachteil, dass solche lokalen Kontaktprobleme sich überproportional stark und damit störend auf das Messsignal auswirken.

Aus der GB 549 140 A ist ein weiterer Spannkopf, entsprechend dem Oberbegriff des Anspruchs 1, bekannt.

### Darstellung der Erfindung

Es besteht daher die Aufgabe, eine Vorrichtung zur Kraftmessung bei dynamischen Zugversuchen an Werkstoffproben mit einer Kraftmesszelle, in der wenigstens ein Kraftmesssensor integriert ist, derart auszugestalten, dass eine hochgenaue, schwingungsarme Kraftmessung während der Durchführung dynamischer Zugversuche an den Werkstoffproben bis hin zu hohen, crashrelevanten Dehnraten, also bis etwa 1000/s möglich wird, ohne dabei den vorstehend beschriebenen messtechnisch und montagebedingten Aufwand betreiben zu müssen. Vielmehr gilt es eine Vorrichtung anzugeben, die Messergebnisse mit annähernd der gleichen Messqualität wie beim vorstehend erläuterten europäischen Standardverfahren liefert, jedoch mit erheblich reduziertem messtechnischem Aufwand.

Die Lösung der der Erfindung zugrundeliegenden Aufgabe ist im Anspruch 1 angegeben. Den Erfindungsgedanken vorteilhaft weiterbildende Merkmale sind Gegenstand der Unteransprüche sowie aus der nachfolgenden Beschreibung unter Bezugnahme auf das Ausführungsbeispiel zu entnehmen.

Erfindungsgemäß ist eine Vorrichtung zur Kraftmessung bei dynamischen Zugversuchen an Werkstoffproben, mit einer Kraftmesszelle, in der wenigstens ein Kraftmesssensor integriert ist, derart ausgebildet, dass die Kraftmesszelle mit wenigstens einer ersten Verbindungsstruktur einstückig ausgeführt ist, über die die Werkstoffprobe unmittelbar mit der Kraftmesszelle verbindbar ist. Der wenigstens eine Kraftmesssensor ist von der ersten Verbindungsstruktur beabstandet angeordnet, so dass selbst durch lokale Kontaktprobleme oder durch Trägheitskräfte angeregte Schwingungen innerhalb der Verbindungsstruktur die Messsignalaufnahme nur wenig beeinflussen können. Trotz der Beabstandung zur Verbindungsstruktur weisen die vorzugsweise zwei oder mehr an der Kraftmesszelle angeordneten Kraftmesssensoren einen möglichst geringen Abstand zu der in der Verbindungsstruktur gefassten Werkstoffprobe auf.

Der der Erfindung zugrunde liegende Gedanke betrifft die Integration der Kraftmesszelle in die Einspannvorrichtung bzw. umgekehrt, wodurch eine möglichst kompakte Bauweise einer erfindungsgemäßen Kraftmesszelle möglich wird. Hierdurch können die Kraftsensoren möglichst nahe an der zu prüfenden Werkstoffprobe angeordnet werden. Schwingende Massen, wie bspw. bei der eingangs erläuterten Piezo-Kraftmesszelle können somit weitgehend vermieden werden, so dass das Messergebnis nachhaltig beeinflussende Störgrößen nahezu vollkommen ausgeschlossen werden können.

Die erfindungsgemäß ausgebildete Kraftmesszelle besteht in einer ersten möglichen Ausführungsform aus einem einstückig gefertigten Gehäuseteil, das wenigstens eine Verbindungsstruktur zum lösbarfesten Verbinden mit einer Werkstoffprobe vorsieht. In einer bevorzugten Ausführungsform für Rundzugproben ist die Verbindungsstruktur als Schraubverbindung ausgebildet, die innerhalb des Gehäuses der Kraftmesszelle ein Innengewinde aufweist, in das ein entsprechendes Gegengewinde, das in geeigneter Weise an der Werkstoffprobe selbst vorgesehen ist, eingedreht werden kann. Auf diese Weise ist es möglich, das Gehäuse der Kraftmesszelle in unmittelbaren, lösbar festen Kontakt mit der zu überprüfenden Werkstoffprobe zu bringen. Jegliche Zwischenelemente, wie sie aus dem Stand der Technik bekannt sind, sind vollkommen entbehrlich. Wie auch aus einem im weiteren zu beschreibenden Ausführungsbeispiel ersichtlich, sind zur Messsignalaufnahme Kraftmesssensoren in Form von Dehnungsmessstreifen an der Außenseite des Gehäuses nahe der Verbindungsstruktur angebracht.

Zur Befestigung der Kraftmesszelle an einem festen Gegenlager weist die Kraftmesszelle an ihrem der ersten Verbindungsstruktur gegenüberliegenden Ende einen stabileren bzw. massiveren Gehäusebereich auf als im Vergleich zur eher dünnwandigen Gehäusewandausbildung im Bereich der ersten Verbindungsstruktur sowie jenem Bereich in dem die Kraftmesssensoren angebracht sind. Das der ersten Verbindungsstruktur gegenüberliegende Ende des Gehäuses, also die zweite Verbindungsstruktur der Kraftmesszelle weist vorzugsweise ein Aussengewinde auf, über das die Kraftmesszelle mit einer feststehenden Basisplatte der Prüfmaschine fest verbindbar ist. Selbstverständlich sind auch alternative Verbindungstechniken zur festen Verbindung der Kraftmesszelle mit der Prüfmaschine denkbar, wie bspw. Bolzen- oder Flanschverbindungen; diese finden vorzugsweise Einsatz bei der Überprüfung von flachbandartig ausgebildeten Werkstoffproben. Das der Kraftmesszelle gegenüberliegende freie Ende der zu untersuchenden Messprobe wird zur Krafteinleitung mit dem beweglichen Teil einer Belastungseinrichtung, z.B. mit einer Schnellzerreißmaschine, fest verbunden.

In einer bevorzugten Ausführungsform sind zur Messsignalaufnahme vier symmetrisch zum Gehäuse angebrachte Dehnungsmessstreifen vorgesehen, die zur Erhöhung der Messgenauigkeit und zur Detektion und gegebenenfalls zur Kompensierung von Biegeanteilen jeweils gegenüberliegend am Gehäuse angebracht sind. Da das Gehäuse im Falle der Untersuchung von Rundzugproben als Drehteil weitgehend rotationssymmetrisch ausgebildet ist, eignet sich eine symmetrische Anbringung von Kraftmesssensoren in Form von Dehnungsmessstreifen am Gehäuse. Werden drei, vier oder gar mehr Kraftmesssensoren, die entsprechend miniaturisiert ausgeführt sind, gleichverteilt in einer oder mehreren Querschnittsebenen um das Gehäuse angbebracht, so ist eine nahezu vollständige Erfassung der räumlichen Deformation des Gehäuses und somit der Werkstoffprobe während des Zugversuches möglich, wodurch hochpräzise Messergebnisse gewonnen werden können.

Die Dimensionierung des Gehäuses und die Wahl des Gehäusematerials der Kraftmesszelle richten sich grundsätzlich nach der Steifigkeit der zu prüfenden Werkstoffprobe bzw. des zu überprüfenden Werkstoffes. Als besonderes geeignetes Gehäusematerial zur Prüfung von Metallen haben sich Titanlegierungen erwiesen. Neben der Materialwahl ist jedoch auch die konstruktive Auslegung des Gehäuses der Kraftmesszelle wesensbestimmt für ihre Steifigkeit. So gilt es, das Gehäuse einerseits deutlich steifer als die Werkstoffprobe auszubilden, andererseits ist das Gehäuse jedoch ausreichend weich auszulegen, so dass hinreichend große Verformungen innerhalb des Gehäuses auftreten, die mit den am Gehäuse applizierten Dehnungsmessstreifen erfasst werden können.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Seitenansicht einer Kraftmesszelle,
- Fig. 2: charakteristische Spannungs-Dehnungs-Kurven,
- Fig. 3: photographische Darstellung einer Ausführungsform einer Kraftmesszelle sowie
- Fig. 4: Vorder- und Seitenansicht einer Kraftmesszelle für die Untersuchung von Flachzugproben.

### Wege zur Ausführung der Erfindung, gewerbliche Verwendbarkeit

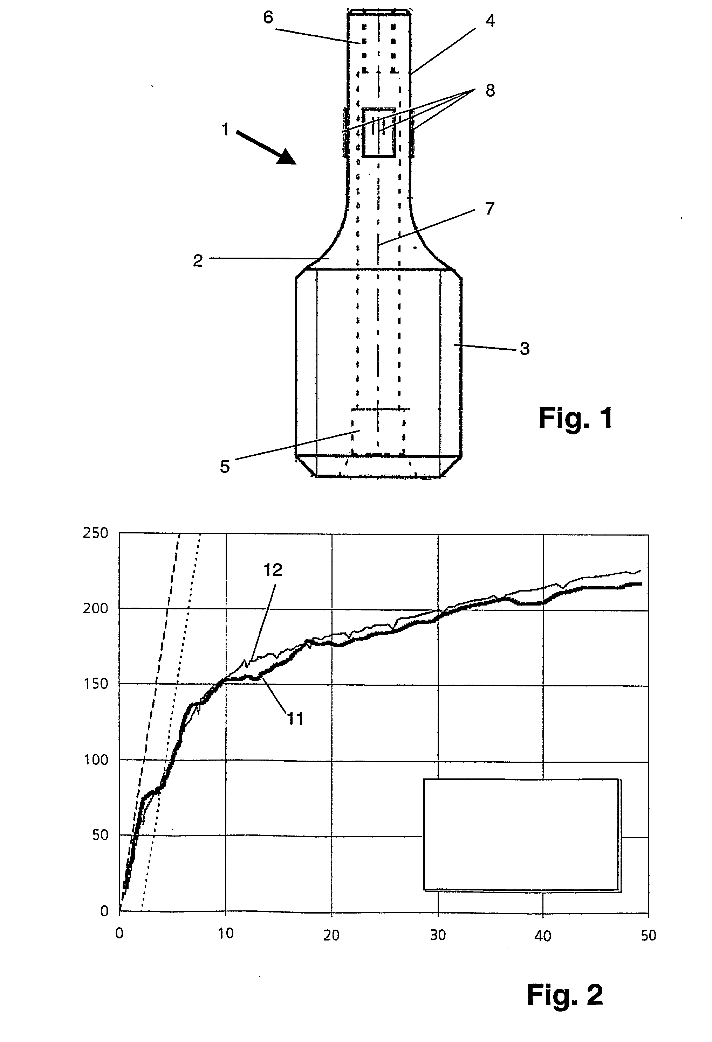

In Figur 1 ist eine Seitenansicht einer vorteilhaft ausgebildeten Kraftmesszelle 1 dargestellt, die aus einem einstückigen Gehäuse 2 besteht. Das Gehäuse 2 weist einen zylinderförmigen Abschnitt 3 mit einem Aussengewinde auf, an den sich konisch verjüngend ein zweiter, zylinderförmig ausgebildeter Abschnitt 4 anschließt. Das Gehäuse 2 ist aus einem Vollmaterial gefertigt und kann als Drehteil hergestellt werden. Vorzugsweise eignen sich als Gehäusematerial hochfeste Titanlegierungen. Zu Befestigungszwecken der Kraftmesszelle 1 bspw. an ein festes Gegenlager dient das Aussengewinde im Abschnitt 3. Eine zentrale Bohrung 5 dient vorzugsweise der einfachen konstruktiven Anpassung der Steifigkeit der Zelle im Bereich 4, die durch geeignete Wahl von Innen- und Aussendurchmesser erzielt wird. In gleicher Weise weist der zylinderförmige Abschnitt 4 der Kraftmesszelle 1 eine als Innengewinde ausgebildete Verbindungsstruktur 6 auf, in die ein Außengewinde einer Werkstoffprobe (nicht dargestellt) lösbarfest eingedreht werden kann. Der zylinderförmig ausgebildete Bereich 4 der Kraftmesszelle 1, in dem zu Befestigungszwecken der Werkstoffprobe die Verbindungsstruktur 6 in Form eines Innengewindes vorgesehen ist, weist zusätzlich an seiner äußeren Kontur vier symmetrisch zur Symmetrieachse 7 der Kraftmesszelle 1 angeordnete Dehnungsmessstreifen 8 auf. Durch die sich im Außendurchmesser im Bereich 4 verjüngende Außenkontur vermag das Gehäuse 2 in diesem Bereich 4 den bei Belastung der Werkstoffprobe in das Gehäuse 2 induzierten Verformungen in gewissen Grenzen zu folgen, so dass diese Gehäuseverformungen höchstpräzise von den Dehnungsmessstreifen 8 erfasst werden können.

Selbst sehr schnelle Verformungen werden direkt über die Werkstoffprobe in den Bereich 4 der Kraftmesszelle 1 übertragen, ohne Beeinflussung durch resonantes Schwingungsverhalten angrenzender Einspannteile und angekoppelter Kraftmesszellen sowie deren Oszillationen.

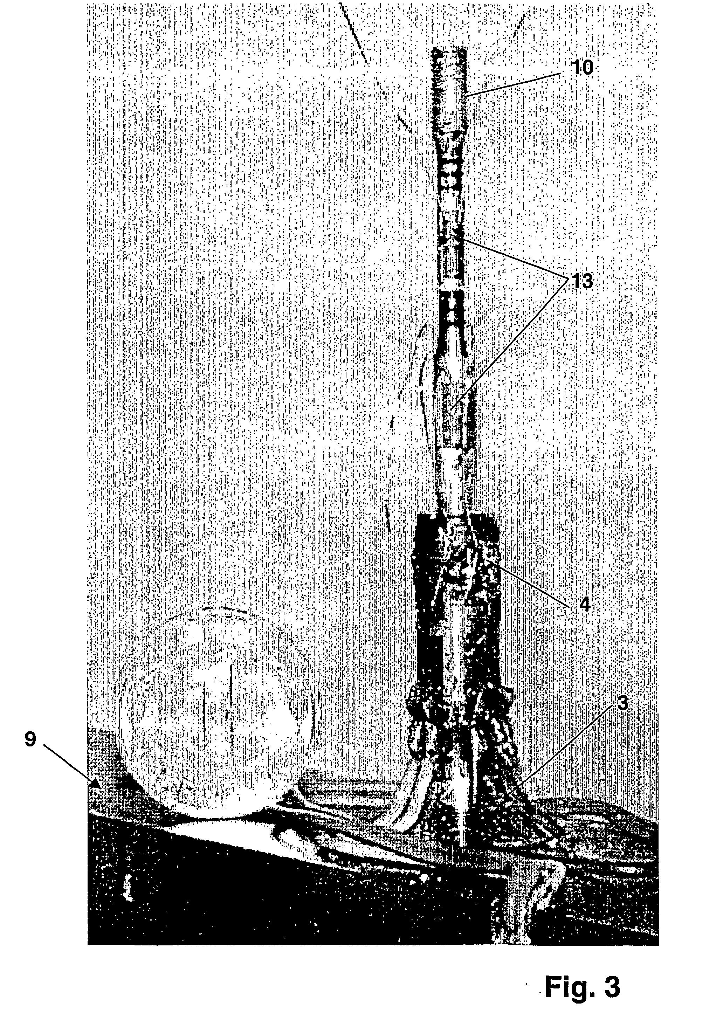

In Figur 3 ist eine photographische Darstellung einer real ausgebildeten Kraftmesszelle 1 speziell für die Prüfung von Mini-Rundzugproben mit Prüfdurchmessern von weniger als 2 mm dargestellt, die mit ihrem Bereich 3 lösbarfest mit einem festen Gegenlager 9 verbunden ist. - Nur der Vollständigkeit halber sei an dieser Stelle angemerkt, dass die Proben durchaus auch größere Dimensionen annehmen können, sofern genügend Material verfügbar ist, mit 4-8 mm Prüfdurchmesser, die auch entsprechend länger ausgebildet sind. Auch für derartige Proben ist eine entsprechend größer dimensionierte Kraftmesszelle zu verwenden. - Lösbarfest mit dem Bereich 4 der Kraftmesszelle 1 ist eine Werkstoffprobe 10 verbunden, die es gilt, in einem dynamischen Zugversuch zu prüfen. Es handelt sich hierbei um eine Mini-Rundprobe, die aus einer Magnesiumlegierung AM50 gefertigt ist. Zur Durchführung des dynamischen Zugversuches ist an dem oberen Ende der Werkstoffprobe 10 eine entsprechende Schnellzerreißmaschine bzw. ein entsprechendes Schlagwerk anzukoppeln (nicht dargestellt). Das neben der Kraftmesszelle 1 befindliche Geldstück verdeutlicht die Größenverhältnisse der Kraftmesszelle, die über eine sehr kleine und kompakte Bauform von wenigen cm verfügt.

Nur aus Gründen einer vollständigen Beschreibung der in Figur 3 abgebildeten Komponenten sei darauf hingewiesen, dass unmittelbar an der Werkstoffprobe 10 Dehnungsmessstreifen 13 angebracht sind, von denen filigran wirkende, noch anzuschliessende elektrische Verbindungsdrähte ausgehen. Die Messstreifen im dünnen Prüfteil der Probe dienen der hochpräzisen Dehnungsmessung bis etwa 1 % Dehnung. Die im dickeren Teil der Proben applizierten Messstreifen wurden zusätzlich angebracht, um eine simultane Kraftmessung entsprechend dem europäischen Normvorschlag im Vergleich zu der neuen Messzelle einzusetzen (Ergebnisse siehe Fig. 2). Eben diese letztgenannten Messstreifen werden durch die erfindungsgemäße Kraftmesszelle überflüssig. Die Abbildung vermag die aufwendige Applizierung derartiger Dehnungsmessstreifen an die Oberfläche der Werkstoffprobe 10 verdeutlichen.

Mit der in Figur 3 dargestellten realen Versuchsanordnung sind die Kräfte zur Ermittlung der Spannungen der in Figur 2 dargestellten dynamischen Spannungs-Dehnungs-Kurven ermittelt worden. Hierbei ist die Werkstoffprobe mit einer Abzugsgeschwindigkeit der Schnellzerreißmaschine von v = 5 m/s und einer daraus resultierenden Dehnrate von etwa 500/s beaufschlagt worden. In dem in Figur 2 dargestellten Diagramm, entlang dessen Abszisse die Werkstoffdehnung in [‰] und entlang dessen Ordinate die Spannung in Mega-Pascal [MPa] aufgetragen sind, repräsentiert der Diagrammverlauf 11 die Spannungs-Dehnungs-Kurve der Werkstoffprobe 10, die mit Hilfe der erfindungsgemäß ausgebildeten Kraftmesszelle aufgenommen wurde. Zur Verdeutlichung der Messqualität der Messkurve 11 ist eine zweite Spannungs-Dehnungs-Kurve 12 in dem Diagramm in Figur 2 eingetragen, die mit der wesentlich aufwändigeren Probeninstrumentierung in Verbindung mit einer statisch ermittelten, nichtlinearen Kalibrierkurve gewonnen worden ist, eine Technik, die eine Erweiterung des eingangs erläuterten europäischen Standards darstellt.
Es bleibt zu erwähnen, dass die Dehnungen der Werkstoffprobe bis etwa 1 % Dehnung auf der Dehnungsmessstreifen-Messung im dünnen Prüfteil der Probe basieren, danach auf der Vermessung von Hochgeschwindigkeitsaufnahmen.

Die in Figur 2 dargestellten Messergebnisse verdeutlichen, dass die hohe Qualität der Messung gemäß des Standes der Technik durchaus auch mit der erfindungsgemäßen Kraftmesszelle (siehe hierzu Messkurve 11) erreicht werden kann, bei wesentlich reduziertem Aufwand. Nur aus Gründen der Vollständigkeit halber sei darauf hingewiesen, dass die gestrichelt eingetragene Gerade die Hooke'sche Gerade für lineares Werkstoffverhalten darstellt, wohingegen die punktiert eingetragene Gerade eine demgegenüber um 0,2% versetzte Hilfslinie ist, deren Schnittpunkt mit der gemessenen Spannungs-Dehnungskurve definitionsgemäß der technischen Dehngrenze R_{p0,2} entspricht, die im allgemeinen ebenso wie die Spannungs-Dehnungkurve von der Dehnrate abhängig ist. Im vorliegenden Fall läßt sich die dynamische Dehngrenze für eine Dehnrate von 500/s bestimmen.

Mit Hilfe der erfindungsgemäßen Kraftmesszelle kann insbesondere auch der Anfangsbereich nahe dem Koordinatenursprung gemäß der Diagrammdarstellung in Figur 2 mit hoher Genauigkeit und weitgehend unbeeinflusst von überlagerten Schwingungen erfasst werden. Insbesondere kann auch der dynamische E-Modul des jeweiligen Werkstoffes aus der Anfangssteigung bestimmt werden.

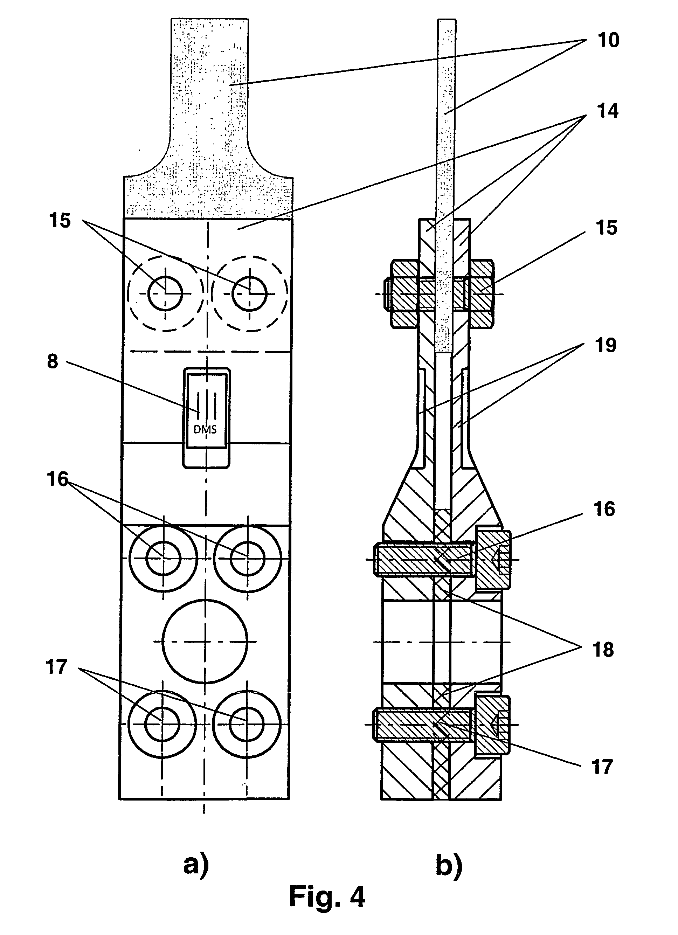

Eine weitere alternative Kraftmesszelle zur Untersuchung von Flachzugproben ist aus der Figur 4 a und b zu entnehmen, die jeweils eine Vorder- und Seitenansicht der Kraftmesszelle darstellen.

Die Kraftmesszelle weist zwei Andruckplatten 14 auf. Beide Andruckplatten 14 sind durch Schraubverbindungen 15, 16 und 17 miteinander fest verfügbar. Im unteren Bereich der Kraftmesszelle ist zwischen beiden Andruckplatten 14 ein Distanzstück 18 eingebracht, das die Dicke einer zu untersuchenden Flachzugprobe 10 aufweist, die im oberen Bereich zwischen beide Andruckplatten 14 eingebracht ist. Die erste Verbindungsstruktur, mit der die zu untersuchende Flachzugprobe 10 zwischen beide Andruckplatten 14 einspannbar ist, stellen die zwei Schraubverbindungen 15 dar. Beabstandet von diesen sind an der Außenseite der Andruckplatten 14 Dehnungsmesstreifen 8 zur Messsignalaufnahme angebracht.
Der obere Bereich der Andruckplatten 14, in dem die Flachzugprobe 10 einsetzbar ist, ist im Unterschied zum unteren Bereich dünnwandig ausgebildet. Auf diese Weise werden die auf die Probe 10 wirkenden Kräfte mit hochempfindlichen Dehnungsmesstreifen 8 registriert. Diese sind im vorliegenden Ausführungsbeispiel in Ausnehmungen bzw. Vertiefungen 19 innerhalb der Andruckplatten 14 integriert, um sie durch Abdeckmittel zu schützen. Demgegenüber ist der untere Bereich der Andruckplatten 14, die zweite Verbindungsstruktur, möglichst massiv ausgebildet, so dass dieser Bereich möglichst schwingungsarm ausgebildet und mit einem festen Gegenlager verbindbar ist.

Durch die erfindungsgemäße Ausbildung der Kraftmesszelle sind somit folgende Vorteile gegenüber dem Stand der Technik anzuführen:
- keine oder extrem geringe Oszillationen in den mit der Kraftmesszelle erfassbaren Messsignalen,
- die Messgenauigkeit der erfindungsgemäßen Kraftmesszelle ist vergleichbar mit der viel aufwendigeren Probeninstrumentierung gemäß europäischem Standard,
- reduzierter Aufwand und dadurch reduzierte Kosten, da keine Probeninstrumentierung erforderlich ist,
- reduzierter Aufwand und dadurch reduzierte Kosten, da keine statischen Kalibrierversuche mit der instrumentierten Probe erforderlich sind,
- einfache Handhabung und Einsetzbarkeit der erfindungsgemäßen Kraftmesszelle, vergleichbar mit statischen Kraftmesszellen,
- die Kraftmesszelle ist auch bei Werkstoffen ohne ausgeprägten linearelastischen Anfangsbereich einsetzbar, wie bspw. bei Magnesiumlegierungen oder Kunststoffen, bei denen die Messung mit Probeninstrumentierung gemäß europäischen Standard und bei Verwendung linearer Kalibrierfaktoren versagt,
- Konstruktions- und Messprinzip ist problemlos anwendbar für unterschiedliche dynamische Versuchsanordnungen, wie bspw. Rundzug- oder Flachzugproben unterschiedlicher Größe.

### Bezugszeichenliste

- 1: Kraftmesszelle
- 2: Gehäuse
- 3, 4: Zylinderförmig ausgebildeter Gehäusebereich
- 5: Bohrung
- 6: Innengewinde
- 7: Symmetrieachse
- 8: Kraftmesssensor, Dehnungsmessstreifen
- 9: Festes Gegenlager
- 10: Werkstoffprobe, Flachzugprobe
- 11: Messkurve, aufgenommen mit erfindungsgemäßer Kraftmesszelle
- 12: Messkurve gemäß Stand der Technik
- 13: Dehnungsmessstreifen-Instrumentierung gemäß ESIS-Normvorschlag P7-00
- 14: Andruckplatte
- 15: Schraubverbindung
- 16: Schraubverbindung
- 17: Schraubverbindung
- 18: Distanzstück
- 19: Ausnehmung

## Patentansprüche

1. Vorrichtung zur Kraftmessung bei dynamischen Zugversuchen an Werkstoffproben, mit einer Kraftmesszelle, in der wenigstens ein Kraftmesssensor integriert ist und die mit einer ersten Verbindungsstruktur einstückig ausgeführt ist, wobei über die erste Verbindungsstruktur die Werkstoffprobe mit der Kraftmesszelle lösbar fest verbindbar ist, und die Kraftmesszelle eine zweite Verbindungsstruktur aufweist, die der ersten Verbindungssstruktur gegenüberliegt und über die die Kraftmesszelle an einem festen Gegenlager befestigbar ist,
**dadurch gekennzeichnet, dass** wenigstens zwei Kraftmesssensoren von der ersten Verbindungsstruktur derart beabstandet an der Kraftmesszelle angeordnet sind, dass die wenigstens zwei Kraftmesssensoren zur ersten Verbindungsstruktur und somit zur Zugprobe einen kleineren Abstand aufweisen als zur zweiten Verbindungsstruktur,
dass die Kraftmesszelle ein Gehäuse oder zwei Andruckplatten aufweist, das bzw. die zumindest im Bereich der Kraftmesssensoren eine geringere Wandstärke aufweist bzw. aufweisen als im übrigen Bereich des Gehäuses oder der Andruckplatten, und
dass die Kraftmesszelle im Bereich der zweiten Verbindungsstruktur über eine bezüglich elastischer Verformbarkeit stabilere Bauform verfügt als im Bereich der ersten Verbindungsstruktur und der wenigstens zwei Kraftmesssensoren.

2. Vorrichtung nach Anspruch 1,
**dadurch gekennzeichnet, dass** die Verbindungsstruktur eine Schraubverbindung ist, mit einer an der Kraftmesszelle vorgesehenen Gewindekontur, in die ein an der Werkstoffprobe vorgesehenes Gegengewinde lösbar fest einfügbar ist.

3. Vorrichtung nach Anspruch 1,
**dadurch gekennzeichnet, dass** die Verbindungsstruktur eine Flansch- oder Bolzenverbindung ist, und
dass an der Werkstoffprobe ein korrespondierender Gegenflansch bzw. eine zur Bolzenverbindung korrespondierende Verbindungskontur vorgesehen ist.

4. Vorrichtung nach einem der Ansprüche 1 bis 3,
**dadurch gekennzeichnet, dass** die zwei Andruckplatten der Kraftmesszelle mittels lösbar festen Andruckmitteln gegenseitig verpressbar sind, dass die Zugprobe zwischen den Andruckplatten kraftbeaufschlagt verpressbar ist, und dass der wenigstens eine Kraftmesssensor beabstandet zu den Andruckmitteln an den Andruckplatten angeordnet ist.

5. Vorrichtung nach einem der Ansprüche 1 bis 4,
**dadurch gekennzeichnet, dass** das Gehäuse axialsymmetrisch zu einer Symmetrieachse ausgebildet ist, längs der die Zugkraft über die Werkstoffprobe auf die Kraftmesszelle einwirkt.

6. Vorrichtung nach Anspruch 5,
**dadurch gekennzeichnet, dass** die wenigstens zwei Kraftmesssensoren in symmetrischer Anordnung relativ zur Symmetrieachse am Gehäuse angebracht sind.

7. Vorrichtung nach einem der Ansprüche 1 bis 6,
**dadurch gekennzeichnet, dass** die Kraftmesszelle Titan aufweist.

## Claims

1. A device for force measurement in dynamic tensile experiments on material samples, comprising a force measuring cell, in which at least one force measuring sensor is integrated and which is executed one piece with a first connecting structure, with the material sample being connectable in a firm, detachable manner via said connecting structure, and with said force measuring cell being provided with a second connecting structure, which is disposed opposite said first connecting structure and via which said force measuring cell is attachable to a fixed back-rest
**wherein** at least two force measuring sensors are disposed on said force measuring cell spaced from said first connecting structure such a manner that the distance between said at least two force measuring sensors and said first connecting structure, and thus between the former and the tensile sample, is smaller than the distance between said at least two force measuring sensors and said second connecting structure,
said force measuring cell is provided with a housing or with two pressure plates, which has, respectively have, a thinner wall thickness in the region of said force measuring sensors than in the other housing region or other regions of said pressure plates, and
said force measuring cell has more a stable type of construction regarding elastic deformability in the region of said second connecting structure than in the region of said first connecting structure and said at least two force measuring sensors.

2. The device according to claim 1,
**wherein** said connecting structure is a screw connection, having provided on said force measuring cell a thread contour into which a counter thread provided on the material sample is insertable in a firm, detachable manner.

3. The device according to claim 1,
**wherein** said connecting structure is a flange or bolt connection, and on the material sample a corresponding counter flange is provided, respectively a connecting contour
corresponding to said bolt connection.

4. The device according to one of the claims 1 to 3,
**wherein** said two pressure plates of said force measuring cell can be pressed against each other by means of firm, detachable pressure means
the tensile sample can be pressed between said pressure plates with force, and said at least one force measuring sensor is disposed on said pressure plates at a distance from said pressure means.

5. The device according to one of the claims 1 to 4,
**wherein** said housing is designed axially symmetrical to a axis of symmetry along which the tensile force acts on said force measuring cell via said material sample.

6. The device according to claim 5,
**wherein** said at least two force measuring sensors are applied on said housing in a symmetrical arrangement relative to said axis of symmetry.

7. The device according to claim 1 to 6,
**wherein** said force measuring cell contains titanium.

## Revendications

1. Dispositif pour la mesure de la force dans le cas d'essais de traction dynamiques sur des échantillons de matériau, comprenant une cellule dynamométrique, dans laquelle au moins un capteur dynamométrique est intégré et qui est conçu d'une seule pièce avec une première structure de liaison, l'échantillon de matériau pouvant être relié de façon rigide mais amovible à la cellule dynamométrique au moyen de la première structure de liaison, et la cellule dynamométrique présentant une seconde structure de liaison, qui fait face à la première structure de liaison et par laquelle la cellule dynamométrique peut être fixée sur un contre-palier fixe,
**caractérisé en ce qu'**au moins deux capteurs dynamométriques sont disposés sur la cellule dynamométrique à distance de la première structure de liaison de telle sorte que les au moins deux capteurs dynamométriques présentent par rapport à la première structure de liaison et donc à l'échantillon de traction une distance inférieure à la distance à la seconde structure de liaison,
**en ce que** la cellule dynamométrique présente un boîtier ou deux plaques d'appui, qui présente(nt) au moins dans la zone des capteurs dynamométriques une épaisseur de paroi plus faible que dans la zone restante du boîtier ou des plaques d'appui, et
**en ce que** la cellule dynamométrique dispose dans la zone de la seconde structure de liaison d'une forme de construction plus stable en ce qui concerne la déformabilité élastique que dans la zone de la première structure de liaison et des au moins deux capteurs dynamométriques.

2. Dispositif selon la revendication 1,
**caractérisé en ce que** la structure de liaison est un assemblage vissé, avec un contour de filetage prévu sur la cellule dynamométrique, dans lequel un contre-filetage prévu sur l'échantillon de matériau peut être inséré de façon rigide mais amovible.

3. Dispositif selon la revendication 1,
**caractérisé en ce que** la structure de liaison présente un assemblage à bride ou à boulon, et
**en ce que** sur l'échantillon de matériau est prévue une contre-bride correspondante ou une structure de liaison correspondant à l'assemblage par boulon.

4. Dispositif selon l'une quelconque des revendications 1 à 3,
**caractérisé en ce que** les deux plaques d'appui de la cellule dynamométrique peuvent être comprimées l'une contre l'autre au moyen d'appuis rigides mais amovibles, **en ce que** l'échantillon de traction peut être comprimé entre les plaques d'appui par la sollicitation d'une force et **en ce que** le au moins un capteur dynamométrique est disposé à distance des moyens d'appui sur les plaques d'appui.

5. Dispositif selon l'une quelconque des revendications 1 à 4,
**caractérisé en ce que** le boîtier est conçu avec une symétrie axiale par rapport à un axe de symétrie, le long duquel la force de traction agit au moyen de l'échantillon de matériau sur la cellule dynamométrique.

6. Dispositif selon la revendication 5,
**caractérisé en ce que** les au moins deux capteurs dynamométriques sont placés dans un agencement symétrique par rapport à l'axe de symétrie sur le boîtier.

7. Dispositif selon l'une quelconque des revendications 1 à 6,
**caractérisé en ce que** la cellule dynamométrique présente du titane.
